Europäisches Patentamt

(19) European Patent Office

Office européen des brevets

(11) Veröffentlichungsnummer: **0 103 172**
**B1**

(12) **EUROPÄISCHE PATENTSCHRIFT**

(45) Veröffentlichungstag der Patentschrift:
15.07.87

(21) Anmeldenummer: 83107905.8

(22) Anmeldetag: **10.08.83**

(51) Int. Cl.⁴: **G 01 N 11/06**

(54) Vorrichtung zur Bestimmung der Viskosität von Flüssigkeiten, insbesondere des Blutplasmas.

(30) Priorität: **13.08.82 DE 3230246**

(43) Veröffentlichungstag der Anmeldung:
**21.03.84 Patentblatt 84/12**

(45) Bekanntmachung des Hinweises auf die Patenterteilung:
**15.07.87 Patentblatt 87/29**

(84) Benannte Vertragsstaaten:
**AT BE CH DE FR GB IT LI LU NL SE**

(56) Entgegenhaltungen:
**FR - A - 775 672**
**US - A - 3 930 403**
**US - A - 4 083 363**

(73) Patentinhaber: **Kiesewetter, Holger, Dr., Stockwiese 44, D-6650 Homburg-Kirrberg/Saar (DE)**

(72) Erfinder: **Jung, Friedrich, Stockwiese 44, D-6650 Homburg-Kirrberg/Saar (DE)**
Erfinder: **Kiesewetter, Holger, Dr., Stockwiese 44, D-6650 Homburg-Kirrberg/Saar (DE)**
Erfinder: **Roggenkamp, Hans-Günther, Kullenhofstrasse 36, D-5100 Aachen (DE)**

(74) Vertreter: **Görtz, Dr. Fuchs, Dr. Luderschmidt Patentanwälte, Sonnenberger Strasse 100 Postfach 26 26, D-6200 Wiesbaden (DE)**

ACTORUM AG

## Beschreibung

Die Erfindung betrifft eine Vorrichtung zur Bestimmung der Viskosität von Flüssigkeiten, insbesondere des Blutplasmas, gemäss dem Oberbegriff des Anspruchs 1.

Aus der FR-A 775 672 ist eine Vorrichtung der eingangs erwähnten Art bekannt, mit der die Viskositäten von Flüssigkeiten bestimmt werden können.

Als ein eigenständiges, bewegtes Organ kann Blut angesehen werden, das eine Aufschwemmung von verschiedenen Zellen im Plasma als kontinuierliche Phase ist. Es soll im wesentlichen die Blutzellen und das Plasma durch sämtliche Teile des Gefässbettes befördern. In diesem Plasma befinden sich Fette, Elektrolyte und insbesondere Eiweisse. Dabei dient das Blut durch Massen- und Wärmetransport der Aufrechterhaltung eines sogen. Fliessgleichgewichtes, das den jeweiligen Organen bzw. deren Zellen angepasst ist. So wird der Mehrbedarf an Energie beispielsweise durch die Steigerung des Blutflusses und damit durch eine Erhöhung des Angebotes an Sauerstoff, Glukose oder Fettsäuren gedeckt, während gleichzeitig für den Abtransport von Stoffwechselzwischenprodukten und -endprodukten gesorgt wird. Kann aus irgendwelchen Gründen ein solches Fliessgleichgewicht über längere Zeit nicht eingehalten werden, so ist der Organismus nicht lebensfähig.

Zur Aufrechterhaltung dieses lebensnotwendigen Fliessgleichgewichts muss ein den jeweiligen Erfordernissen angepasster Volumenstrom

$$\dot{V}_{Blut} = (\Delta p \pi r^4)/(8\, l \eta_{Blut}) \qquad (1)$$

Hierzu wird der treibende Druck $\Delta p$ letztlich durch die Pumpleistung des Herzens vorgegeben, während die Vollblutviskosität $\eta_{Blut}$ und die Gefässgeometrie ($l$ = Länge, $r$ = Gefässradius) den hydrodynamischen Widerstand des Strömungskanals bestimmen.

Eine in den letzten Jahren erfolgte intensive Untersuchung des Einflusses von Vollblutviskosität auf das Fliessverhalten von Blut hat eindeutig gezeigt, dass unter pathologischen Bedingungen gerade diese Grösse der limitierende Faktor für die Perfusion sein kann.

Die scheinbare Viskosität des Blutes, das eine nicht Newtonsche Flüssigkeit ist, wird im wesentlichen von folgenden Faktoren bestimmt, nämlich der Plasmaviskosität, dem Hämatokritwert (Volumenanteil der Blutzellen am Gesamtblut), der Aggregation der Erythrozyten und der Verformbarkeit der Erythrozyten. Jeder dieser Faktoren, also auch die Plasmaviskosität, spielt eine wichtige Rolle bei der Erkennung von Krankheiten im Blut und soll demzufolge möglichst einfach und genau im medizinischen Routinebetrieb bestimmt werden.

Zur Quantifizierung der Plasmaviskosität sind im wesentlichen folgende Typen von Viskosimetern bekannt, nämlich das Kugelfall-, das Rotations- und das Kapillarviskosimeter, wobei die derzeit eingesetzten Messgeräte aus den nachstehend erläuterten Gründen für den medizinischen Routinebetrieb nur schlecht geeignet sind.

Die Konstruktion des Kugelfallviskosimeters basiert auf dem theoretischen Ansatz von Stokes, nach dem für die Widerstandskraft einer umströmten Kugel folgendes gilt:

$$F_W = 6\pi\eta_{Pl}\, r_K\, v_K \qquad (2)$$

Die Kugel sinkt dabei nach kurzer Anlaufstrecke mit konstanter Geschwindigkeit im Fluid. Dabei wird die Schwerkraft der Kugel mit der Dichte $\varsigma_K$ im Gleichgewicht gehalten durch die Auftriebskraft und die Reibungskraft $F_W$. Aus der Gleichung

$$4/3\pi(\varsigma_K-\varsigma_{Pl})\, r_K^3\, g = 6\pi\eta_{Pl}\, r_K\, v_K \qquad (3)$$

und der Zeit t, die die Kugel benötigt, um eine definierte Strecke l zurückzulegen, wobei die mittlere Geschwindigkeit $v_K = l/t$ ist, ergibt sich die Viskosität:

$$\eta_{Pl} = 2/9\, r_K^2/l\, g\, (\varsigma_K-\varsigma_{Pl})\, t \qquad (4)$$

üblicherweise wird der Ausdruck $2/9\, r_K^2/_l\, g$ in die experimentell bestimmte Gerätekonstante K einbezogen, so dass sich empirisch die Viskosität bestimmen lässt.

Allerdings sind die Messungenauigkeiten bei diesem Verfahren durch die visuelle Zeitnahme relativ gross und können durch opto-elektronische Massnahmen vermieden werden.

Weiterhin ist zu berücksichtigen, dass die diesem Verfahren zugrunde liegende Theorie die Einhaltung der schleichenden Strömung fordert und daher den Einsatz relativ grosser Kugeln voraussetzt. Damit verbunden ist ein Füllvolumen von wenigstens 50 ml Plasma, was einem erforderlichen Blutvolumen von etwa 100 ml entspricht. Eine derartige Blutentnahme stellt in aller Regel für den Patienten eine unzumutbare Belastung dar, insbesondere dann, wenn die häufig notwendige Durchführung mehrerer Messungen (Messung weiterer Parameter; Therapieüberwachung) notwendig sein sollte.

Das zweite Verfahren zur Bestimmung der Plasmaviskosität ist die Rotationsviskosimetrie. Dabei ergibt sich die Plasmaviskosität nach folgender Formel

$$\eta_{Pl} = K\, M_D/\Omega, \qquad (5)$$

wobei   K   = Gerätekonstante,
        $M_D$ = Drehmoment und
        $\Omega$  = Winkelgeschwindigkeit sind.

Dabei stellt die Gerätekonstante, die abhängig ist von der Art der verwendeten Messkammer, eine Vielzahl von Fehlerquellen dar, die auf die Art und Bearbeitung der Messkammer zurückzuführen ist.

So besteht die erste Gruppe derartiger Viskosimeter aus einer Anordnung von koaxialen Zylindern, beispielsweise das GDM-Viskosimeter (Gilinson-Dauwalter-Merrill), während die zweite Gruppe eine Platte-Kegel-Anordnung aufweist, beispielsweise das Wells-Brookfield-Viskosimeter.

Ein häufig benutztes Rotationsviskosimeter verwendet beide genannten Kammeranordnungen, nämlich die sogen. Mooney-Konfiguration. Es handelt sich dabei um koaxiale Zylinder, die an der Ober- und Unterseite als Platte-Kegel-System ausgeführt sind. Weitere Ausführungen der Kammergeometrie sind etwa das Rhombo-Sphäroid-Viskosimeter von Dintenfass oder das Rheogoniometer von Weissenberg.

Bei den meisten Rotationsviskosimetern wird die Drehzahl über ein Schaltgetriebe vorgegeben und das abgeführte Drehmoment, das sich in Abhängigkeit von der Plasmaviskosität einstellt, gemessen. Im Gegensatz dazu arbeitet das Rotationsrheometer von Deer (Mooney-Konfiguration) mit vorgegebenem Drehmoment, wobei die abgegebene Drehzahl gemessen wird.

Da die Theorie des Rotationsviskosimeters eine stationäre Scherströmung im Ringspalt voraussetzt, müssen Innen- und Aussenzylinder sehr genau gefertigt sein, um eine gute Reproduzierbarkeit der Messungen zu gewährleisten. Ausserdem muss die Kammer nach jeder Messung sorgfältig gereinigt werden, ohne dass Rückstände des Reinigungsmittels in der Kammer zurückbleiben. Denn derartige Rückstände der Messlösung und des Reinigungsmittels verändern die Benetzbarkeit der Oberflächen der Messkammer, was direkt in die Messung mit eingeht. Überdies werden je Messung etwa 15 ml Plasma benötigt, was etwa 30 ml Vollblut entspricht. Da üblicherweise zur Mittelwertbestimmung mehrere Messungen durchgeführt werden, bedeutet dies, dass dem Patienten grössere Blutmengen abgenommen werden müssen, was für ihn eine erhöhte Belastung darstellt und insofern unerwünscht ist.

Das bekannteste Verfahren zur Viskositätsmessung von Plasmen besteht in der Bestimmung der Ausflusszeit oder des Volumenstroms $\dot{V}$, das in einem Kapillarviskosimeter gemessen wird. Für die mittlere Geschwindigkeit in einer Kapillare gilt nach Hagen-Poiseuille:

$$\dot{V}_{Pl} = (\Delta p\, r_i^2)/(8\eta_{Pl}\, l), \qquad (6)$$

wobei $\Delta p$ = Druckverlust in der betrachteten Kapillare,
$r_i$ = Innenradius der Kapillare und
$l$ = Länge der betrachteten Kapillare sind.

Nach diesem Gesetz bestimmen alle Typen von Kapillarviskosimetern die Plasmaviskosität. Dabei wird die mittlere Geschwindigkeit $\bar{v} = l/t$ über eine Messung der Zeit bestimmt, die das Plasma benötigt, um eine definierte Strecke $l$ zurückzulegen. Da die Geometrie der Kapillare ($r_i$, $l$) festliegt, kann bei bekanntem $\Delta p$ die Viskosität berechnet werden.

So gibt das Kapillarviskosimeter von Harkness einen konstanten Differenzdruck $\Delta p$ über eine Vakuumpumpe in einer waagerecht angeordneten Kapillare vor.

Weiterhin ist das Viskosimeter von Ubbelohde bekannt, bei dem das Gewicht der Plasmasäule als treibender Druck eingesetzt wird.

Ein weiteres Viskosimeter mit kontinuierlich veränderbarem Druck wurde von Martin et al. entwickelt.

Das in der Technik häufig eingesetzte Kapillarviskosimeter nach Ostwald besteht aus einer U-Rohr-Kapillare mit vertikal angeordneten Schenkeln und zeichnet sich durch ein genau reproduzierbares Messvolumen bei ebenfalls genau einstellbaren Drücken aus.

Allen diesen Kapillarviskosimetern ist gemeinsam, dass sie einen aufwendigen apparativen Aufbau benötigen, was auf die häufig nur sehr kurze Messzeit und damit eine umfangreiche Detektoreinrichtung zurückzuführen ist. Überdies sind die eingesetzten Kapillaren schwierig herzustellen, so dass infolge der Herstellungstoleranzen Messfehler entstehen, und müssen, da sie regelmässig aus Glas bestehen, über eine längere Zeitspanne thermostatisiert werden, so dass sie nur beschränkt zur Verfügung stehen. Darüber hinaus stellt die Reinigung einer derartigen Messkapillare, wie bereits schon vorstehend erläutert, einen weiteren Nachteil dar, da diese sehr genau durchgeführt werden muss, und nur vollständig rückstandsfreie Kapillaren zum Einsatz kommen können. Des weiteren besteht bei vertikal angeordneten Kapillaren der Nachteil, dass am Auslaufende eine Tropfenbildung einsetzen kann, die die Messzeit der die Kapillare durchlaufenden Flüssigkeitssäule durch die entgegenwirkende Oberflächenspannung des Tropfens verfälscht, so dass eine derartige Kapillare besondere, schwer herzustellende Anschlussstücke aufweisen muss.

Aus der schon erwähnten FR-A 775 672 ist eine Vorrichtung zur Bestimmung der Viskosität bekannt, die ein senkrecht stehendes Kapillarrohr aufweist, an das sich nach oben ein als waagerechtes Rohrstück ausgebildetes Flüssigkeitsreservoir und nach unten ein Messraum anschliesst. Infolge der senkrechten Anordnung der Kapillare muss diese sehr eng ausgeführt sein, um ein zu schnelles Strömen der Flüssigkeit in der Kapillare zu verhindern. Dies führt zwangsläufig zu besonderen Strömungsverhältnissen in der Kapillare, da die Strömungsgeschwindigkeit im wesentlichen von den Kapillar- und Adhäsionskräften in der Kapillare bestimmt wird.

Des weiteren bleibt bei dieser senkrechten Anordnung der treibende Druck nicht gleich, da sich stetig der Inhalt des Flüssigkeitsreservoirs und darüber hinaus die in der Kapillare vorliegende Flüssigkeitssäule verändern.

Schliesslich wird als Messkapillare ein festes Material, d.h. üblicherweise Glas, eingesetzt, das zum einen mit der notwendigen Präzision schwierig herzustellen ist und zum anderen infolge der hohen Herstellungskosten nicht nach einmaligem Gebrauch weggeworfen werden kann. Insofern muss also eine derartige Kapillare nach jeder Messung gereinigt werden. Die dabei zwangsläufig auftretenden Rückstände führen häufig zu einer Verfälschung der nachfolgenden Messergebnisse, so dass sich eine derartige Kapillare dann nicht zur Bestimmung genauer Viskositätswerte eignet.

Aus der US-A 4 083 363 ist es bekannt, bei einer Vorrichtung zur Bestimmung der Viskosität von Blut ein elastisches, als Wegwerfartikel konzipiertes Kapillarrohr als Ansaugrohr zu benutzen.

Der Erfindung liegt die Aufgabe zugrunde, die Vorrichtung der eingangs erwähnten Art so fortzubilden, dass auch schnellfliessende Flüssigkeiten in relativ weiten Kapillaren genau und reproduzierbar in ihrer Viskosität in relativ kurzen Zeitabständen bestimmt werden können, wobei Reinigungsarbeiten entfallen.

Diese Aufgabe wird durch die kennzeichnenden Merkmale des Anspruchs 1 gelöst.

Die erfindungsgemässe Vorrichtung lässt auch die Messung der Viskosität von schnellfliessenden Flüssigkeiten, wie Blutplasma, zu, da einerseits die treibende Höhe relativ gering ist und andererseits die Länge der waagerechten Kapillarrohranteile, die die Strömungsgeschwindigkeit verlangsamt, relativ gross ist. Dabei ist die erfindungsgemässe Messanordnung so ausgelegt, dass die treibende Höhe während des Messvorgangs konstant bleibt, was zu einer konstanten Fliessgeschwindigkeit innerhalb der Messkapillaren und zu konstanten Messwerten führt.

Erfindungsgemäss können sogen. Einmalkapillaren verwendet werden, d.h., dass die Kapillare als Billigartikel hergestellt und nach Gebrauch weggeworfen wird. Für diese Zwecke eignet sich ein flexibler Kunststoffschlauch, der mit den geforderten Toleranzen hergestellt werden kann. Derartige Kunststoffmaterialien gehen vorteilhafterweise mit den zu untersuchenden Flüssigkeiten in der Messzeit im wesentlichen keine Wechselwirkungen ein, geben also keine Weichmacher u.dgl. an die Flüssigkeit ab.

Ein derartiges Kapillarrohr wird in eine der gewünschten Kapillarenführung entsprechend geformte Nut einer Platte eingelegt, die das Kapillarrohr sicher hält. Dabei besteht die bevorzugte Kapillarenführung darin, dass das Kapillarrohr in wenigstens zwei Kapillarrohrteile gelegt wird, wobei die jeweiligen Kapillarrohrteile im wesentlichen parallel und waagerecht angeordnet sind. Dabei ist der Radius zwischen den Kapillarrohrteilen so dimensioniert, dass ein Abquetschen oder Abknicken des Kapillarrohrs sicher verhindert wird.

Der Durchmesser der Kapillare ist so gewählt, dass die Säule der zu untersuchenden Flüssigkeit beim Durchströmen der Kapillare weder abreisst noch infolge der Oberflächenspannung die Kapillare zusetzt und nicht durch sie fliesst. Zu letzterem Zweck ist vorteilhafterweise das Einlaufende der Kapillare als sog. Beschleunigungsstrecke ausgebildet und derart gestaltet, dass vom oberen waagerechten Ast ein im wesentlichen senkrechter Ast zur Einlauföffnung geführt wird. Nach dem Durchlaufen dieser Beschleunigungsstrekke, in dem die Hafttreibung des Fluids zu Beginn der Messung im Schlauch sicher überwunden wird, tritt die Flüssigkeit in den horizontal angeordneten Kapillarrohrteil ein, dessen erster Teil vorteilhafterweise als Vorlauf- oder Beruhigungsstrecke ausgebildet ist. Nach dem Durchlaufen der Beruhigungsstrecke ist sichergestellt, dass eine stationäre Strömung in der Schlauchkapillare vorliegt, die der eigentlichen Messung unterzogen werden kann.

Infolge der in Schlaufen angeordneten Messstrecke, die im wesentlichen in einer Horizontalebene angeordnet ist, liegt während der Messung eine konstante treibende Druckdifferenz $\Delta p$ vor, die auf den Höhenunterschied zwischen den einzelnen waagerecht angeordneten Ästen zurückgeht. Während beim Stand der Technik eine im wesentlichen senkrechte Kapillare eingesetzt wird, die innerhalb kürzester Zeit durchströmt wird, liegt demgegenüber erfindungsgemäss eine Kapillarenanordnung vor, die sowohl aus einem senkrecht angeordneten als auch einem waagerecht angeordneten Teil besteht, wobei beide Teile auf geringster Fläche untergebracht sind. Dies wird dadurch erreicht, dass die Schlauchkapillare mäanderförmig oder in gegenläufig angeordneten Schlaufen angeordnet ist. Somit überlagern sich die Strömung einer Flüssigkeit in einem im wesentlichen waagerechten Rohr und die Strömung einer Flüssigkeit in einem im wesentlichen senkrecht angeordneten Rohr. Dies hat zur Folge, dass die Messzeiten in einer derartigen Anordnung erheblich grösser sind als die Messzeiten in einer ausschliesslich senkrecht angeordneten Messstrecke. Hierdurch werden die Messfehler erheblich vermindert und die Messzeiten wesentlich besser und genauer messbar als bei einer senkrechten Anordnung.

In einer weiteren vorteilhaften Ausführung weist die Schlauchkapillare an ihrem Ende eine Steigstrecke auf, die verhindert, dass die zu untersuchende Flüssigkeit ausfliesst, und/oder dass ausfliessende Flüssigkeit Tropfen bildet, die die Messzeiten, wie vorstehend erläutert, verfälschen.

Nach der Messung wird der Schlauch aus der Nut der Platte entnommen und entweder für weitere Bestimmungen der Flüssigkeit aufbewahrt oder aber weggeworfen. Somit treten keine Auslaufeffekte auf. Weiterhin ist keine Säuberung der Schlauchkapillare nötig, so dass die eingangs erwähnten negativen Effekte vollständig vermieden werden können.

Eine weitere Erläuterung der Erfindung erfolgt durch die nachfolgende Beschreibung von drei Ausführungsbeispielen unter Bezugnahme auf die Zeichnung. Es zeigen:

Fig. 1 eine schematische Vorderansicht einer ersten Ausführungsform der erfindungsgemässen Vorrichtung,

Fig. 2 eine schematische Vorderansicht einer zweiten Ausführungsform der erfindungsgemässen Vorrichtung und

Fig. 3 eine schematische Vorderansicht einer weiteren Ausführungsform, die im wesentlichen der in Fig. 1 gezeigten Vorrichtung ähnelt.

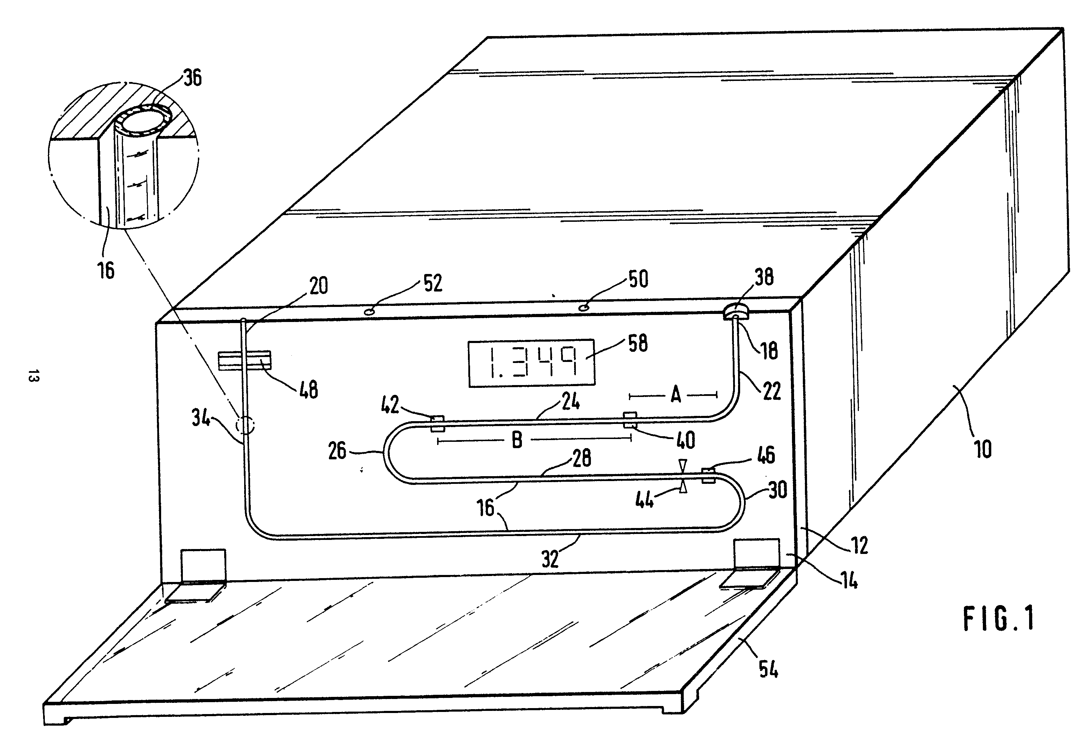

Die in Fig. 1 gezeigte erste Ausführungsform besteht im wesentlichen aus einem Gehäuse 10, das eine geneigt oder vorzugsweise senkrecht angeordnete Frontplatte 12 aufweist. In dem Gehäuse 10 sind die elektronische Regeleinrichtung u.dgl. angeordnet.

Die Vorderseite 14 der Frontplatte weist eine darin eingearbeitete Nut 16 auf, die sich von einem Einlaufende 18 bis zu einem Auslaufende 20 erstreckt.

In der in Fig. 1 gezeigten Ausführungsform erstreckt sich die Nut vom Einlaufende 18 in einen im wesentlichen senkrecht angeordneten Kapillarrohrteil 22, der als Beschleunigungsbereich dient.

An diesen Kapillarrohrteil 22 schliesst sich ein erster waagerechter Kapillarrohrteil 24 an, der in eine mit A bezeichnete Beruhigungsstrecke und in eine mit B bezeichnete Messstrecke eingeteilt ist.

Dieser Kapillarrohrteil 24 geht in einen gekrümmten Kapillarrohrteil 26 über, der in einem zweiten Kapillarrohrteil 28 fortgeführt wird, der wiederum vorteilhafterweise waagerecht angeordnet ist.

In der in Fig. 1 gezeigten besonders bevorzugten Ausführungsform schliesst sich an den Kapillarrohrteil 28 ein zweiter gekrümmter Kapillarrohrteil 30 an, der wiederum in einem im wesentlichen waagerecht angeordneten dritten Kapillarrohrteil 32 fortgeführt ist. Dieser Kapillarrohrteil 32 ist erheblich länger als die Kapillarrohrteile 24 und 28 und vorteilhafterweise so dimensioniert, dass seine Länge in etwa der Länge der Kapillarrohrteile 22, 24 und 28 sowie des gekrümmten Kapillarrohrteils 26 entspricht.

Gemäss einer bevorzugten Ausführungsform schliesst sich an den Kapillarrohrteil 32 ein im wesentlichen als Steigstrecke ausgeführter Kapillarrohrteil 34 an, der zum Auslaufende 20 zurückgeführt ist.

Hinzuzufügen ist, dass die Kapillarrohrteile 22 und 34 nur in einer bevorzugten Ausführungsform vorhanden sind, d.h. dass die Kapillarrohrteile 24 und 32 auch im wesentlichen waagerecht zu den Einlauf- bzw. Auslaufenden auslaufen können.

Weiterhin ist die in Fig. 1 gezeigte Ausführungsform nicht auf eine Anordnung von zwei gekrümmten Kapillarrohrteilen 26 und 30 beschränkt. Vielmehr kann sie auch nur einen gekrümmten Kapillarrohrteil 26 aufweisen, so dass der Kapillarrohrteil 28 bereits den Auslauffast darstellt. Diese Ausführungsform ist jedoch weniger bevorzugt, da die Länge der Nut infolge der Miniaturisierung des Geräts nur bedingt für eine wirksame Messung der Viskosität ausreicht.

Die Nut 16 ist so gearbeitet, dass in sie passgenau ein Schlauch 36 eingelegt werden kann, wie dies aus dem vergrösserten, in Fig. 1 gezeigten perspektivischen Schnittbild ersichtlich ist.

Dabei verläuft der Schlauch 36 vom Einlaufende 18 bis zum Auslaufende 20 in der Nut 16 derart passgenau, dass weder Knickungen noch Verengungen in ihm auftreten, dass also der Querschnitt des Schlauchs im wesentlichen über seine gesamte Länge unverändert bleibt.

Somit entspricht die Tiefe und die Breite der Nut 36 im wesentlichen dem Schlauchdurchmesser. Es hat sich als vorteilhaft herausgestellt, dass der Schlauch einen im wesentlichen kreisförmigen Querschnitt besitzt, wobei der Innendurchmesser etwa 0,5–2 mm, vorzugsweise etwa 0,7–1,0 mm, betragen soll.

Um einen möglichst guten Temperaturausgleich zwischen der vorteilhafterweise thermostatisierten Frontplatte 12, was nachstehend erläutert ist, zu erhalten, beträgt die Wandstärke des Schlauchs etwa 0,2–0,5 mm, vorzugsweise 0,3–0,4 mm.

Als Schlauchmaterial wird vorteilhafterweise ein durchsichtiges Kunststoffmaterial eingesetzt, das lichtdurchlässig ist, so dass die im Schlauch auftretenden Flüssigkeitsfronten mit Hilfe von optischen Sensoren erfasst werden können. Als bevorzugte Kunststoffmaterialien werden Polyurethan und Polyethylen eingesetzt, die im wesentlichen frei von Weichmachern sind. Besonders bevorzugt ist Polyurethan, das in den gewünschten Toleranzen geliefert werden kann, und im hohen Masse reproduzierbare Messergebnisse liefert.

Zum genauen Einlegen des Schlauchs in die Nut 16 kann an seinem Anfang ein Wulst vorgesehen sein, der in eine Ausnehmung 38 in der Frontplatte 12 eingelegt werden kann, die im Bereich des Einlaufendes 18 angeordnet ist. Hierdurch wird sowohl ein exaktes Einlegen des Schlauchs ermöglicht als auch das Einfüllen der Messflüssigkeit in den Schlauch erleichtert.

In der Frontplatte 12 sind im Bereich des Kapillarrohrteils 24 der Nut 16 zwei Detektoren 40 und 42 vorgesehen, die vorzugsweise als Lichtsensoren ausgebildet sind. Vorteilhafterweise sind diese Lichtsensoren jeweils in eine im Kapillarrohrteil 24 vorgesehene Öffnung eingesetzt und behindern nicht das Einsetzen des Schlauchs 36 in diesen Kapillarrohrteil 24. Diese Sensoren 40 und 42 sind derart empfindlich, dass sie auf das Auftreten eines Flüssigkeitsmeniskus und die hierdurch bedingte Lichtveränderung ansprechen.

Stromab des Sensors 42 ist im Kapillarrohrteil 28 eine Füllmarke 44 vorgesehen, in deren unmittelbarer Nähe stromab ein weiterer Sensor 46 vorgesehen ist. Dieser Sensor 46 entspricht in Art und Aufbau sowie Anordnung den Sensoren 40 und 42. Dieser Sensor 46 steuert über eine nicht gezeigte Leitung einen Verschlussmagneten 48, der in der Nähe des Auslaufendes 20 angeordnet ist.

Beim Auftreten eines Signals am Sensor 46 wird der Verschlussmagnet 48 aktiviert und verschliesst den in die Nut 16 eingelegten Schlauch 36 für eine bestimmte Zeit, vorzugsweise etwa 0,5–4 Min., insbesondere 1–2 Min. Diese Zeit dient dazu, dass die im Schlauch 36 vorhandene Flüssigkeit auf die in der Frontplatte 12 und dementsprechend im Schlauch 36 vorhandene Temperatur temperiert wird, was einer trockenen Thermostatisierung entspricht.

Die Frontplatte 12 ist für die Thermostatisierung mit zwei Anschlüssen 50 und 52 ausgestattet, die als elektrische Anschlüsse oder als Rohranschlüsse für die Zuleitung einer entsprechend erwärmten, aus einem nichtgezeigten Reservoir stammenden Flüssigkeit ausgebildet sind. Bevorzugt ist eine elektrische Erwärmung mittels einer nichtgezeigten, in der Frontplatte 12 vorgesehenen Heizspirale, die mit den Anschlüssen 50 und 52 in Verbindung steht. Diese Anschlüsse 50 und 52 können natürlich auch innerhalb des Gehäuses 10 untergebracht sein. Sofern Blutplasma in seiner Viskosität gemessen werden soll, wird die Frontplatte 12 und damit der Schlauch 36 auf die Körpertemperatur, d.h. auf ca. 37°C temperiert. Bei dem Einsatz anderer Flüssigkeiten können natürlich beliebige Temperaturen in der Frontplatte, die vorzugsweise aus Aluminium besteht, vorgelegt werden.

Weiterhin weist die Frontplatte 12 an ihrem unteren Ende einen vorzugsweise klappbaren Deckel 54 auf, der vorteilhafterweise aus einem durchsichtigen Kunststoffmaterial hergestellt ist. Beim Schliessen des Deckels kann die Anzeige 58 gelöscht werden, so dass ein neuer Wert gemessen werden kann.

Die Viskositätsmessung wird mit der erfindungsgemässen Vorrichtung nach folgenden Regeln und auf folgende Weise durchgeführt:

Gemessen wird die Zeit t, die die Flüssigkeit, insbesondere das Blutplasma benötigt, um im Schlauch 36 die definierte Messstrecke B zurückzulegen.

Unter der Annahme einer Hagen-Poiseuilleschen Strömung in der Kapillare ergibt sich für den Volumenstrom nach der folgenden Gleichung

$$\dot{V}_{PI} = (\pi r_s^4 \Delta p)/(8 \eta_{PI} l), \tag{7}$$

wobei $\dot{V}_{PI}$ = Plasmavolumenstrom, $r_s$ = Radius des Kapillarschlauches, $l$ = Länge der Plasmasäule und $\eta_{PI}$ = dynamische Viskosität des Plasmas bedeuten.

Mit $\dot{V}_{PI} = V/t$ und $V = \pi r_s^2 l_M$ ergibt sich die dynamische Viskosität nach Gleichung:

$$\eta_{PI} = (\Delta p\, r_s^2 t)/(8\, l\, l_M), \tag{8}$$

wobei $l_M$ = Länge der Messstrecke (B) und t = gemessene Durchflusszeit bedeuten.

Der treibende Druck $\Delta p$ ist dabei der hydrostatische Druck der Plasmasäule, der rein geometrisch durch die Überhöhung der Messstrecke gegenüber dem Kapillarrohrteil 32 gegeben ist. Daraus folgt als Bestimmungsgleichung für die dynamische Viskosität $\eta_{PI}$:

$$\eta_{PI} = (g\, r_s^2 \Delta h \varsigma_{PI} t)/(8\, l\, l_M), \tag{9}$$

wobei g = Erdbeschleunigung, $\Delta h$ = konstruktiv gegebene treibende Höhendifferenz und $\varsigma_{PI}$ = Dichte des Plasmas bedeuten.

Alle Konstanten werden zu einer Gerätekonstanten K zusammengefasst. Daraus ergibt sich:

$$\eta_{PI} = K \varsigma_{PI} t \tag{10}$$

Aus dieser Formel ist ersichtlich, dass die kinematische Viskosität $\nu_{PI} = \eta_{PI}/\varsigma_{PI}$ direkt durch die Messung der Ausflusszeit bestimmt und angezeigt werden kann. Da die Dichte des Plasmas nur in engen Grenzen schwankt (max. ±3%), kann in einer einfachen Ausführungsform – unter Annahme einer mittleren Plasmadichte $\bar{\varsigma}_{PI}$ – auch die dynamische Viskosität nach folgender Formel (11) berechnet und als Wert ausgegeben werden:

$$\eta_{PI} = K \bar{\varsigma}_{PI} t.$$

Der durch diese vereinfachende Annahme mögliche Messfehler ist sicher geringer als ±3%.

Die Messung wird so durchgeführt, dass der Schlauch 36 zunächst in die Nut 16 der Frontplatte 12 eingelegt wird. Anschliessend wird die zu untersuchende Flüssigkeit, insbesondere Plasma, das aus dem dem Patienten entnommenen antikoagulierten Blut gewonnen wurde, in einer Menge von etwa 200–400, max. 500 µl in den Schlauch eingeführt. Vorzugsweise wird hierzu eine 2 ml-Spritze verwendet, deren Kanüle in die Kapillare des Schlauchs 36 eingeführt wird. Diese Kanüle schliesst die Kapillare dicht ab, so dass die Flüssigkeit sich nur durch den Druck auf den Kolben der Spritze in der Kapillare vorbewegt. Die Füllung der Kapillare wird abgeschlossen, wenn die Flüssigkeitsfront die Füllmarke 44 erreicht.

Anschliessend verbleibt entweder die Kanüle der Spritze solange in der Kapillare, bis die eingefüllte Flüssigkeit auf die Temperatur der Frontplatte 12 erwärmt ist, oder man zieht die Kanüle vorzugsweise nach dem Einfüllen heraus, so dass sich die Flüssigkeitsfront bis zum Sensor 46 fortbewegt. Hierdurch wird der Sensor 46 betätigt, der wiederum den Verschlussmagneten 48 auslöst, der den Schlauch 36 abquetscht, so dass sich die Flüssigkeitssäule im Schlauch 36 nicht mehr fortbewegen kann.

Man temperiert über eine bestimmte Zeit von etwa 0,4–4 Min., insbesondere 1–2 Min., und erreicht hierdurch eine trockene Thermostatisierung des eingesetzten Plasmas auf etwa 37°C. Nach dieser Zeit öffnet sich automatisch der Verschlussmagnet 48, und es setzt der eigentliche Messvorgang ein.

Dabei dient der Kapillarrohrteil 22 zunächst als Beschleunigungsstrecke, in dem die Haftreibung des Fluids im Schlauch 36 überwunden wird. Anschliessend tritt die Flüssigkeit in die Beruhigungsstrecke A des Kapillarrohrteils 40 ein, in dem eine im wesentlichen stationäre Strömung erreicht wird. Beim Passieren des ersten Sensors 40, also beim Eintreten in die Messstrecke B, wird der Messvorgang gestartet, der dann beendet ist, wenn die Flüssigkeitsfront den zweiten Sensor 42 erreicht hat. Die gemessene Zeit wird dann auf der Anzeige 58 ausgegeben und entspricht einem Viskositätswert, der auf einer Eichkurve abgelesen werden kann.

Nach Durchlaufen der Messstrecke B setzt sich die Strömung der Flüssigkeit im unteren Kapillarrohrteil 32 solange fort, bis sie durch den Aufstieg im Kapillarrohrteil 34 abgebremst wird und zum Stillstand kommt.

Anschliessend wird der Deckel 54, der bei der Messung die Frontplatte 12 verschlossen hatte, geöffnet und der Schlauch 36 aus der Nut 16 entnommen. Dabei kann das im Schlauch enthaltene Plasma entweder wiederverwendet oder zusammen mit dem Schlauch 36 weggeworfen werden. Für die Messung von Blutplasma hat es sich als besonders vorteilhaft herausgestellt, dass die Messstrecke B etwa 30–200 mm, insbesondere etwa 80–120 mm lang ist und die geometrisch vorgegebene treibende Höhe, also der senkrechte Abstand zwischen dem Kapillarrohrteil 24 und dem Kapillarrohrteil 32, etwa 40–160, insbesondere 90–120 mm ist.

Die Vorrichtung kann natürlich auch eine einprogrammierte Eichkurve aufweisen, so dass die Anzeige 58 den selbsttätig errechneten Viskositätswert angibt. Diese Anzeige bleibt vorteilhafterweise bis zur nächsten Messung bestehen.

Bei jeder weiteren Messung wird ein neuer Kapillarschlauch benutzt. Dies erspart alle sonst erforderlichen Reinigungsvorgänge und gewährleistet wegen der in jedem Fall gleichen Benetzbarkeit gut reproduzierbare Messungen in einem Fehlerbereich von max. ±2%.

Da das Gerät sehr handlich ist, dauert seine Bestückung, das Einlegen und Füllen des Schlauchs, max. etwa 1 Min. Vorteilhafterweise geschehen sämtliche anschliessenden Messvorgänge, einschliesslich des Vortemperierens des Plasmas, automatisch und erfordern keinerlei besondere Bedienung oder Anwesenheit. Somit ist das Gerät etwa alle 2–3 Min. für eine Messung erneut einsetzbar; es ist aufgrund seiner kleinen Abmessungen, seiner trockenen Thermostatisierung und seiner einfachen und zeitsparenden Handhabung transportabel und kann so beispielsweise direkt zur bedside Diagnostik verwendet werden. Es kann nach kurzer Einführung von jeder Hilfskraft fehlerfrei bedient werden und erfordert keinerlei Reinigungsarbeiten, so dass in kurzer Zeitfolge eine beliebige Anzahl von Messungen durchgeführt werden kann. Da nur ein äusserst geringes Messvolumen (max. 200 μl) benötigt wird, kann das Gerät zur täglichen Therapiekontrolle ohne grosse Patientenbelastung eingesetzt werden.

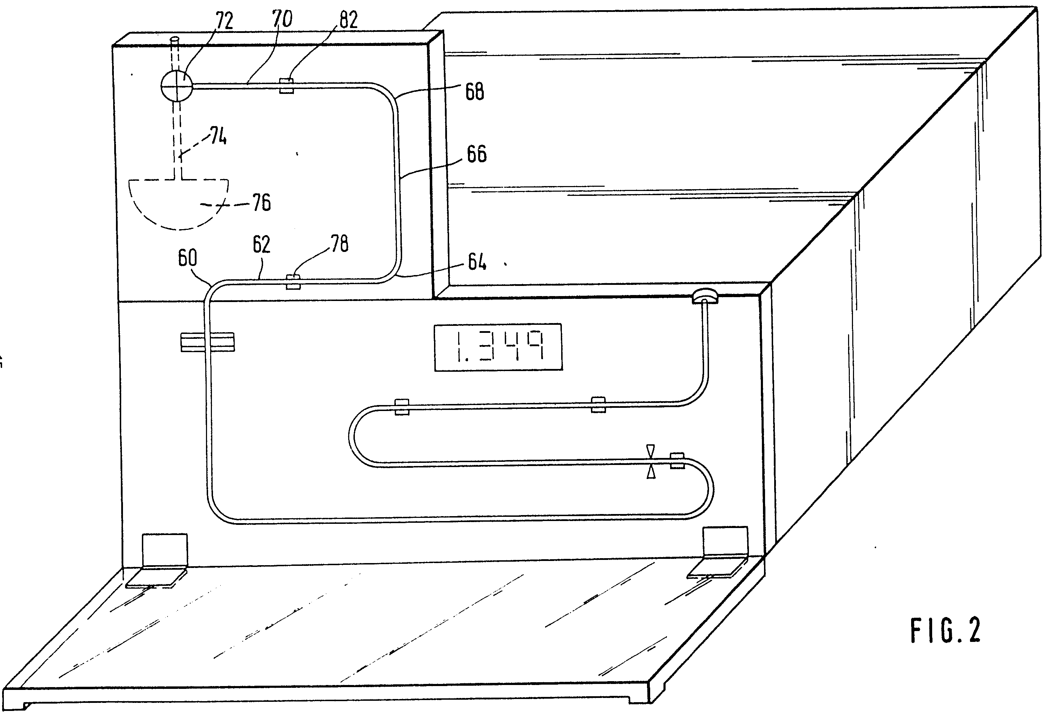

Eine weitere Ausführungsform ist in Fig. 2 gezeigt, in der gleiche Bezugszeichen gleiche Teile darstellen. Die in dieser Fig. 2 dargestellte Vorrichtung erlaubt die Bestimmung der dynamischen und kinematischen Viskosität, da diese Vorrichtung zusätzlich mit einer Dichtemesseinrichtung ausgerüstet ist.

Wie aus Fig. 2 ersichtlich, weist diese Vorrichtung in ihrem rechten Bereich die vorstehend erläuterte Vorrichtung zur Bestimmung der Viskosität auf, so dass diese nicht mehr eingehend erläutert wird. Gegenüber der in Fig. 1 geschilderten Ausführung geht der Kapillarrohrteil 34 bei 60 erneut in einen unteren, im wesentlichen waagerechten Kapillarrohrteilabschnitt 62 über, der wiederum in einen gekrümmten Kapillarrohrteil 64 übergeht, an den sich ein senkrechter Kapillarrohrteil 66 anschliesst. Über einen gekrümmten Kapillarrohrteil 68 ist dieser Kapillarrohrteil mit einem weiteren, im wesentlichen waagerechten, ein Dreiwegeabsperrorgan 72 enthaltenden Kapillarrohrteilabschnitt 70 in Verbindung. Dieses seitlich an der Frontplatte 12 angeordnete Dreiwegeabsperrorgan 72 kann jedoch auch im Gehäuse 10 untergebracht sein, wobei der Schlauch 36 entsprechend damit verbunden wird.

Somit erstrecken sich die Nut 16 und der Schlauch 36 entsprechend dieser zweiten Ausführungsform bis zu dem Dreiwegeabsperrorgan 72, das entweder den Schlauch 36 zur Belüftung freigibt oder aber über eine Leitung 74 eine Fluidverbindung mit einer Saugpumpe 76 herstellt. Dieses Dreiwegeabsperrorgan 72 ist während der vorstehend geschilderten Viskositätsmessung auf «Entlüftung» gestellt.

Soll jedoch die Dichte der Flüssigkeit gemessen werden, wird, nachdem der Viskositätswert bestimmt worden ist, das Dreiwegeabsperrorgan 72 automatisch umgeschaltet, wobei die Verbindung mit der Saugpumpe 76 hergestellt wird.

Die Dichtemessung erfolgt folgendermassen:

An die Plasmasäule im Schlauch 36 wird ein Unterdruck angelegt, der diese in den linken Teil der Messanordnung hochzieht, also in die Kapillarrohrteile 34, 62, 66 u. 70. Hierzu ist mit steigender Höhe ein steigender Unterdruck nötig, der von der Saugpumpe 76 geliefert wird. Um eine sichere Messung zu gewährleisten, wird die treibende Höhe, die durch den senkrechten Abstand zwischen den Kapillarrohrteilabschnitten 62 u. 70 bestimmt wird, erheblich grösser gewählt als die treibende Höhe, die zur Viskositätsmessung eingesetzt wird. Sie liegt beispielsweise bei etwa 60–120, insbesondere 80–100 mm.

Zunächst wird die im Kapillarrohrteil 34 befindliche Flüssigkeitssäule mittels Unterdruck in den Kapillarrohrteilabschnitt 62 gesaugt, in dem ein Sensor 78 angeordnet ist, der vorzugsweise als optoelektronischer Sensor ausgebildet ist. Dieser Sensor 78 dient zur Feststellung eines ersten Druckwertes $p_1$, der entweder auf der Anzeige 58 ausgegeben oder aber in einem entsprechenden elektronischen Haltekreis gespeichert wird. Anschliessend wird die Flüssigkeit mit einem erhöhten Saugdruck in den oberen Kapillarrohrteilabschnitt 70 gesaugt, in dem wiederum ein Sensor 82 angeordnet ist, der die gleiche Ausgestaltung wie der vorstehend erwähnte Sensor 78 besitzt. Vorteilhafterweise entsprechen diese Sensoren 78 und 82 den Sensoren 40, 42 und 46.

Der am Sensor 82 gemessene zweite Messwert $p_2$ wird ebenfalls festgestellt, wobei die Differenz dieser Messwerte nach folgender Gleichung (12)

$$p_1 - p_2 = \varsigma g \, (h_1 - h_2) \qquad (12)$$

zu der gewünschten Dichte $\varsigma$ führt.

Der Vorteil der grösseren treibenden Höhe ist der wesentlich geringere Einfluss der Benetzbarkeit des Schlauchs 36, der sich im übrigen bei der vorstehenden Differenzbildung eliminiert. Dabei stellt die Höhe $h_1 - h_2$ jeweils den Abstand des Kapillarrohrteilabschnitts 62 bzw. 70 von dem Meniskus der Flüssigkeit dar, der sich im Kapillarrohr 34 befindet. Diese Meniskushöhe ist durch die gesamte Anordnung des Schlauchs und die Einspeisung der Flüssigkeit bis zur Füllmarke vorgegeben.

In einer weiteren Ausführungsform, die sich im wesentlichen an die der Fig. 1 anlehnt, ist das Auslaufende 20 mit dem Dreiwegeabsperrorgan 72 in Verbindung, das mit einer nichtgezeigten Überdruckpumpe verbunden ist. Bei dieser Dichtemessung wird die Flüssigkeitssäule in den Kapillarrohrteil 28 u. 24 durch Überdruck zurückgetrieben, wobei die Sensoren 46 bzw. 42 und 40 zur Bestimmung der Druckwerte $p_1$ bzw. $p_2$ herangezogen werden. Diese Ausführungsform ist jedoch gegenüber der vorstehend beschriebenen Ausführungsform nicht bevorzugt.

Durch die Bestimmung der Dichte $\varsigma_{p1}$ und der vorstehend erwähnten dynamischen Viskosität kann somit nach der Gleichung

$$v_{PI} = \eta_{PI} \qquad (13)$$

bestimmt werden, so dass hierdurch die wichtigsten rheologischen Parameter einer Flüssigkeit in einer einfachen und unkompliziert zu handhabenden Vorrichtung bestimmt werden können.

So ist es über die Bestimmung der Viskosität hinaus mit nur einer Messung der Plasmadichte möglich, eine direkte Aussage über den Gesamteiweissgehalt im Plasma zu machen.

Ein Vergleich der mit der Eichkurve ermittelten Plasmaviskositäten zeigt, dass die hierdurch ermittelten Werte mit den Werten sehr gut übereinstimmen, die mit einem Coulter-Harkness-Viskosimeter aufgenommen wurden. Die Abweichungen der Messwerte betragen dabei etwa ±0,5%.

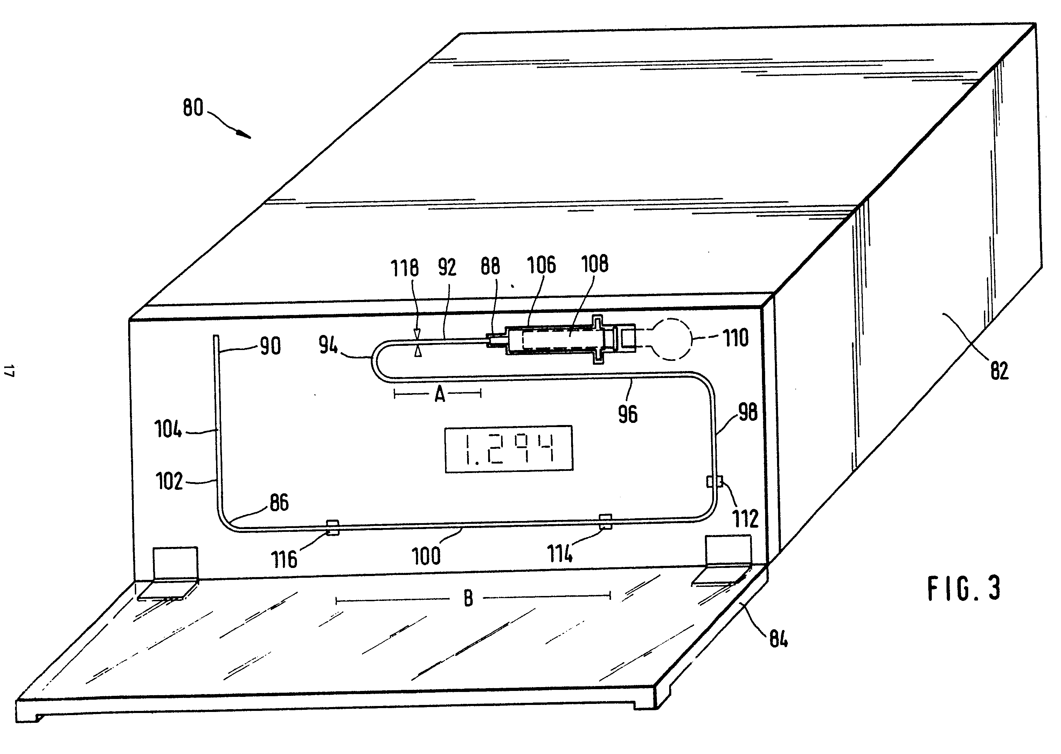

In Fig. 3 ist mit 80 eine weitere besonders bevorzugte Ausführungsform eines erfindungsgemässen Viskosimeters gezeigt, wobei diese Ausführungsform im wesentlichen der in Fig. 1 gezeigten Ausführungsform ähnelt. Insofern wird auf die vorstehenden Ausführungen zu Fig. 1 Bezug genommen.

Das Viskosimeter 80 gemäss Fig. 3 besteht im wesentlichen aus einem Gehäuse 82, das eine vorteilhafterweise geneigt angeordnete Frontplatte 84 aufweist.

Diese Frontplatte 84 entspricht im wesentlichen der Frontplatte 12 von Fig. 1. Dementsprechend ist in dieser Frontplatte 84 wiederum eine Nut 86 vorgesehen, die sich vom Einlaufende 88 bis zum Auslaufende 90 erstreckt. Zu dieser Nut 86 gehören ein erster waagerechter Kapillarrohrteil 92, ein sich daran anschliessender, um einen im wesentlichen rechten Winkel abgebogener Kapillarrohrteil 94, ein sich an den Kapillarrohrteil 94 anschliessender, wiederum um einen im wesentlichen rechten Winkel abgebogener Kapillarrohrteil 96, ein sich an den Kapillarrohrteil 96 anschliessender, um einen rechten Winkel abgebogener Kapillarrohrteil 98, ein sich an den Kapillarrohrteil 98 anschliessender, im wesentlichen um einen rechten Winkel abgebogener Kapillarrohrteil 100 und ein sich an den Kapillarrohrteil 100 anschliessender, im wesentlichen um einen rechten Winkel abgebogener Kapillarrohrteil 102. Dabei bilden die Kapillarrohrteile 92 bis 100 eine S-Form, während der Kapillarrohrteil 102 wenigstens bis zur Höhe des Kapillarrohrteils 92 ansteigt.

Die Kapillarrohrteile 92, 96 und 100 sowie die Kapillarrohrteile 94, 98 und 102 sind im wesentlichen parallel zueinander angeordnet. Jedoch können die Kapillarrohrteile 94 und 98 auch eine im wesentlichen halbkreisförmige Form, also eine Schlaufenform einnehmen. Von Bedeutung ist hierbei nur, dass die im wesentlichen rechtwinkligen Übergänge der Nut 86 das in diese Nut einzulegende Kapillarrohr 104, das dem Kapillarrohr 36 entspricht, nicht abknicken.

Stromauf dieser Nut 86 ist eine etwas vergrösserte Nut 106 angeordnet, in die eine Spritze 108 eingelegt werden kann.

Diese Spritze 108 ist vorteilhafterweise mit dem Kapillarrohr 104 verbunden und wird mit dem Plasma gefüllt in diese Nuten 86 und 106 eingelegt.

Auch diese Ausführungsform weist wiederum eine mit A bezeichnete Beruhigungsstrecke auf, die sich im wesentlichen in den Kapillarrohrteilen 94 und 96 erstreckt.

Im Kapillarrohrteil 100 befindet sich die Messstrecke B, die in Länge dem Kapillarrohrteil 32 gemäss Fig. 1 entspricht.

Bezüglich der Anordnung der Kapillarrohrteile 92 bis 102 wird im übrigen auf die Beschreibung zur Fig. 1 Bezug genommen. So stellt der Kapillarrohrteil 102 wiederum eine Steigstrecke dar und entspricht somit dem Kapillarrohrteil 34 gemäss Fig. 1.

Beim Vergleich der beiden Ausführungsformen gemäss Fig. 1 und 3 ist zu ersehen, dass bei der Fig. 3 der Kapillarrohrteil 22 entfällt und dass die Messstrecke vom Kapillarrohrteil 24 in den unteren Kapillarrohrteil 100 verlegt worden ist. Diese Verlegung ist durch die Anordnung der Spritze 106 bedingt, die gemäss einer bevorzugten Ausführungsform mit einem Spritzenantrieb 110 entsprechend entleert werden kann. Dieser Spritzenantrieb 110 ist in der Frontplatte 94 angeordnet und befindet sich in der Längsachse des Kapillarrohrteils 92.

Bezüglich der Form und Gestalt der Nut 86 sowie der Abmessung und des Materials des Schlauchs wird auf die Beschreibung zur Fig. 1 Bezug genommen.

In der Frontplatte 84 sind wiederum 3 Detektoren 112, 114 und 116 vorgesehen, wobei der Detektor 112 im Kapillarrohrteil 98, vorteilhafterweise an seinem Unterende, vorgesehen und die Detektoren 114 u. 116 im Kapillarrohrteil 100 vorgesehen sind. Vorzugsweise sind diese Detektoren 114, 116 wiederum als Lichtsensoren ausgebildet und sind entsprechend in den Kapillarrohrteilen 98 u. 100 in vorgesehene Öffnungen eingesetzt und behindern somit nicht das Einsetzen des schlauchförmigen Kapillarrohrs 104. Im übrigen entsprechen diese Detektoren in Ausführung und Anordnung den Detektoren 40, 42 und 46, so dass wiederum auf die Beschreibung zu Fig. 1 Bezug genommen wird.

Vorzugsweise ist der Detektor 112 mit dem Spritzenantrieb elektronisch gekoppelt und stoppt diesen Spritzenantrieb, sobald das in das Kapillarrohr 104 gepumpte Plasma den Detektor 112 erreicht hat. Demgemäss wird also der beim Zuklappen des Deckels 54 gemäss Fig. 1 gestartete Füllvorgang für eine bestimmte Zeit unterbrochen, während der das Plasma sich in den Kapillarrohrteilen 94, 96 u. 98 befindet. Bezüglich der Unterbrechungszeiten wird auf die Beschreibung von Fig. 1 verwiesen.

Ist das in der Beruhigungsstrecke A enthaltene Plasma nach dieser Zeit auf die gewünschte Temperatur temperiert worden, wird ein Schlauchschneidwerkzeug 118 betätigt, das am Kapillarrohr 92 angeordnet ist und das in der Nut 86 enthaltene Kapillarrohr 104 durchtrennt. Infolge der Abtrennung von der geschlossenen Spritze 108 vermag das in der Beruhigungsstrecke A enthaltene Plasma infolge der Schwerkraft weiter zu fliessen und gelangt somit in die Messstrecke B.

Diese Messstrecke B, wird – wie vorstehend erläutert – zwischen den Detektoren 114 und 116 gebildet und entspricht somit der Messstrecke B von Fig. 1, die zwischen den Detektoren 40 und 42 gebildet wird. Im übrigen entspricht die Thermostatisierung sowie die Messung der Viskosität ebenfalls der Ausführungsform gemäss Fig. 1, so dass hierauf Bezug genommen wird.

**Patentansprüche**

1. Vorrichtung zur Bestimmung der Viskosität von Flüssigkeiten, insbesondere des Blutplasmas, mit einem Kapillarrohr zur Durchströmung mit der Flüssigkeit unter Einfluss der Schwerkraft, wobei das Kapillarrohr vertikal und horizontal angeordnete Kapillarrohrteile (22, 24, 26, 28, 30, 32, 34; 60, 62, 64, 66, 68, 70; 90, 92, 94, 96, 98, 100, 102) aufweist, und mit einer Einrichtung zur Bestimmung der Durchströmzeit, dadurch gekennzeichnet, dass das Kapillarrohr wenigstens zwei horizontal angeordnete gerade Kapillarrohrteile (24, 28; 96, 100) in Form wenigstens eines ersten und wenigstens eines zweiten Kapillarrohrteils aufweist, von denen einer die Messstrecke (B) aufweist und die über einen vertikal angeordneten Kapillarrohrteil (26; 98) verbunden sind, und als flexibler Kunststoffschlauch ausgebildet ist, der in einer entsprechend geformten Nut (16; 86) einer Frontplatte (12; 84) auswechselbar angeordnet ist.

2. Vorrichtung nach Anspruch 1, dadurch gekennzeichnet, dass der zweite Kapillarrohrteil (28) über einen unteren gekrümmten Kapillarrohrteil (30) mit einem dritten horizontal angeordneten Kapillarrohrteil (32) verbunden ist.

3. Vorrichtung nach Anspruch 1 oder 2, dadurch gekennzeichnet, dass am ersten Kapillarrohrteil (24) zwei Detektoren (40, 42) in einem die Messstrecke (B) bildenden Abstand angeordnet sind.

4. Vorrichtung nach Anspruch 1 oder 2, dadurch gekennzeichnet, dass der zweite Kapillarrohrteil (100) zwei Detektoren (114, 116) in einem die Messstrecke (B) bildenden Abstand aufweist.

5. Vorrichtung nach Anspruch 3 oder 4, dadurch gekennzeichnet, dass der die Messstrecke (B) bildende Abstand 30–200 mm beträgt.

6. Vorrichtung nach einem der Ansprüche 1–5, dadurch gekennzeichnet, dass der senkrechte Abstand zwischen dem ersten Kapillarrohrteil (24; 96) und dem zweiten Kapillarrohrteil (28; 100) 40–160 mm beträgt.

7. Vorrichtung nach einem der Ansprüche 1–6, dadurch gekennzeichnet, dass sich an den zweiten Kapillarrohrteil (100) bzw. dritten Kapillarrohrteil (32) ein aufsteigender Kapillarrohrteil (102 bzw. 34) anschliesst.

8. Vorrichtung nach einem der Ansprüche 1–7, dadurch gekennzeichnet, dass sich an den ersten Kapillarrohrteil (24) ein im wesentlichen vertikal aufsteigender Kapillarrohrteil (2) anschliesst.

9. Vorrichtung nach einem der Ansprüche 1–8, dadurch gekennzeichnet, dass am Auslaufende des zweiten Kapillarrohrteils (28) ein dritter Detektor (46) zur zeitabhängigen Steuerung eines stromab angeordneten Verschlussmagneten (48) angeordnet ist.

10. Vorrichtung nach einem der Ansprüche 4–8, dadurch gekennzeichnet, dass stromauf der Detektoren (114, 116) ein vierter Detektor (112) in der Nut (86) angeordnet ist, mit dessen Signal ein auf der Frontplatte angeordneter Spritzenantrieb (110) und/oder ein Schneidwerkzeug (118) zum Durchtrennen des Kapillarrohrs betätigbar ist.

11. Vorrichtung nach einem der Ansprüche 1–10, dadurch gekennzeichnet, dass der flexible Kunststoffschlauch (36; 104) aus Polyethylen oder Polyurethan mit einem Innendurchmesser von etwa 0,5–2 mm und einer Wandstärke von etwa 0,2–0,5 mm besteht.

12. Vorrichtung nach einem der Ansprüche 1–11, dadurch gekennzeichnet, dass die Frontplatte (12, 84) auf ca. 37°C thermostatisierbar ist.

13. Vorrichtung nach Anspruch 7, dadurch gekennzeichnet, dass der sich an den zweiten (28; 100) bzw. dritten Kapillarrohrteil (32) anschliessende, aufsteigende Kapillarrohrteil (34; 102) wenigstens einen gekrümmten Kapillarrohrteil mit im wesentlichen horizontalen, parallelen Kapillarrohrteilabschnitten (62, 70) aufweist und der obere Kapillarrohrteilabschnitt (70) des Schlauchs (36; 104) mit einem Dreiwegeorgan (72) verbunden ist, das über eine Leitung (74) mit einer Saugpumpe (76) verbunden ist.

14. Vorrichtung nach Anspruch 13, dadurch gekennzeichnet, dass in den horizontalen Kapillarrohrteilabschnitten (62, 70) je ein Detektor (78, 82) angeordnet ist, mit denen der mit der Saugpumpe (76) erzielte Druckwert feststellbar ist.

15. Vorrichtung nach Anspruch 13 oder 14, dadurch gekennzeichnet, dass der senkrechte Abstand zwischen den horizontalen Kapillarrohrteilabschnitten (62, 70) 60–140 mm beträgt.

16. Vorrichtung nach einem der Ansprüche 3–15, dadurch gekennzeichnet, dass die Detektoren (40, 42, 46, 78, 82, 112, 114, 116) optoelektronische Sensoren sind.

## Claims

1. Apparatus for measuring the viscosity of fluids, in particular of blood plasma, comprising a capillary tube for passing said fluid under the influence of gravity, whereby said capillary tube comprises vertical and horizontal capillary tube branches (22, 24, 26, 28, 30, 32, 34; 60, 62, 64, 66, 68, 70; 90, 92, 94, 96, 98, 100, 102), and with a means for measuring the rate of flow, characterized in that said capillary tube comprises at least two horizontally arranged straight capillary tube branches (24, 28; 96, 100) in form of at least a first and at least a second capillary tube branch, one of which comprising the measuring path (B), and which are connected via a vertically arranged capillary tube branch (26; 98), and that it is embodied as flexible plastic hose being exchangeably arranged within a respectively shaped groove (16; 86) of a front plate (12; 84).

2. Apparatus according to claim 1, characterized in that the second capillary tube branch (28) is connected with a third horizontally arranged capillary tube branch (32) via a lower curved capillary tube branch (30).

3. Apparatus according to claim 1 or 2, characterized in that at the first capillary tube branch (24) two detectors (40, 42) are arranged within a distance forming the measuring path (B).

4. Apparatus according to claim 1 or 2, characterized in that the second capillary tube branch (100) comprises two detectors (114, 116) within a space forming the measuring path (B).

5. Apparatus according to claim 3 or 4, characterized in that the space forming the measuring path (B) amounts to 30–200 mm.

6. Apparatus according to any of claims 1 to 5, characterized in that the vertical space between the first capillary tube branch (24; 96) and the second capillary tube branch (28; 100) amounts to 40–160 mm.

7. Apparatus according to any of claims 1 to 6, characterized in that adjacent to the second capillary tube branch (100), respectively the third capillary tube branch (32) there is a rising capillary tube branch (102, respectively 34).

8. Apparatus according to any of claims 1 to 7, characterized in that adjacent to the first capillary tube branch (24) there is a substantially vertically rising capillary tube branch (22).

9. Apparatus according to any of claims 1 to 8, characterized in that at the downstream end of the second capillary tube branch (28) a third detector (46) for time depending control of a downstream arranged closure magnet (48) is arranged.

10. Apparatus according to any of claims 4 to 8, characterized in that streamup of the detectors (114, 116) a fourth detector (112) is arranged within the groove (86) by the signal of which a syringe drive (110) arranged on the front plate and/or a cutting tool (118) for separating the capillary tube is operable.

11. Apparatus according to any of claims 1 to 11, characterized in that the flexible plastic hose (36; 104) consists of polyethylene or polyurethane having an inner diameter of about 0,5–2 mm and a wall thickness of about 0,2–0,5 mm.

12. Apparatus according to any of claims 1 to 11, characterized in that the front plate (12, 84) is temperature controllable to about 37°C.

13. Apparatus according to claim 7, characterized in that the rising capillary tube branch (34; 102) adjacent to the second (28; 100), respectively third capillary tube branch (32) comprises at least one curved capillary tube branch with substantially horizontal, parallel capillary tube sections (62, 70) and the upper capillary tube section (70) of the hose (36; 104) is connected with a three-way part (72) which is connected with a suction pump (76) via a conduit (74).

14. Apparatus according to claim 13, characterized in that within each of the horizontal capillary tube sections (62, 70) one detector (78, 82) is arranged by means of which the pressure value achieved with the suction pump (76) may be determined.

15. Apparatus according to claim 13 or 14, characterized in that the vertical space between the horizontal capillary tube sections (62, 70) amounts to 60–140 mm.

16. Apparatus according to any of claims 3 to 15, characterized in that the detectors (40, 42, 46, 78, 82, 112, 114, 116) are optoelectronical sensors.

## Revendications

1. Dispositif pour déterminer la viscosité de liquides, notamment du plasma sanguin, comprenant un tube capillaire pour le passage du liquide sous l'influence de la pesanteur, le tube capillaire comprenant des parties de tube capillaire disposées horizontalement (22, 24, 26, 28, 30, 32, 34; 60, 62, 64, 66, 68, 70; 90, 92, 94, 96, 98, 100, 102), et un dispositif pour déterminer la durée de l'écoulement, caractérisé en ce que le tube capillaire comprend au moins deux parties de tube capillaire rectilignes (24, 28; 96, 100) disposées horizontalement, sous la forme d'au moins une première et d'au moins une seconde parties de tube capillaire, dont l'une comprend le parcours de mesure (B) et qui sont reliées par une partie de tube capillaire (26; 98) disposée verticalement, et est constitué sous forme d'un tuyau en matière plastique souple qui est placé de façon interchangeable dans une gorge (16; 86) de forme correspondante pratiquée dans une plaque avant (12; 84).

2. Dispositif selon la revendication 1, caractérisé en ce que la seconde partie de tube capillaire (28) est reliée par l'intermédiaire d'une partie de tube capillaire inférieure et courbe (30) à une troisième partie de tube capillaire disposée horizontalement (32).

3. Dispositif selon la revendication 1 ou 2, caractérisé en ce que deux détecteurs (40, 42) sont montés sur la première partie de tube capillaire (24) selon un écartement formant le parcours de mesure (B).

4. Dispositif selon la revendication 1 ou 2, caractérisé en ce que la seconde partie de tube capillaire (100) comprend deux détecteurs (114, 116) selon un écartement formant le parcours de mesure (B).

5. Dispositif selon la revendication 3 ou 4, caractérisé en ce que la distance formant le parcours de mesure (B) est comprise entre 30 et 200 mm.

6. Dispositif selon l'une quelconque des revendications 1 à 5, caractérisé en ce que la distance verticale séparant la première partie de tube capillaire (24; 96) et la seconde partie de tube capillaire (28; 100) est comprise entre 40 et 160 mm.

7. Dispositif selon l'une quelconque des revendications 1 à 6, caractérisé en ce qu'une partie de tube capillaire montante (102 ou 34) est raccordée à la seconde partie de tube capillaire (100) ou à la troisième partie de tube capillaire (32).

8. Dispositif selon l'une quelconque des revendications 1 à 7, caractérisé en ce qu'une partie de tube capillaire montante (22) sensiblement verticale se raccorde à la première partie de tube capillaire (24).

9. Dispositif selon l'une quelconque des revendications 1 à 8, caractérisé en ce qu'un troisième détecteur (46) destiné à la commande en fonction de temps d'un aimant de fermeture (48) monté en aval est disposé dans l'extrémité de sortie de la seconde partie de tube capillaire (28).

10. Dispositif selon l'une quelconque des revendications 4 à 8, caractérisé en ce qu'en aval des détecteurs (114, 116) est monté dans la gorge (86) un quatrième détecteur (112) au moyen du signal duquel peuvent être actionnés un mécanisme d'actionnement de seringue (110) et/ou un outil de sectionnement (118) destiné au sectionnement du tube capillaire, disposés dans la plaque avant.

11. Dispositif selon l'une quelconque des revendications 1 à 10, caractérisé en ce que le tuyau en matière plastique souple (36; 104) est constitué en polyéthylène ou en polyuréthane, avec un diamètre intérieur d'environ 0,5 à 2 mm, et une épaisseur de paroi d'environ 0,2 à 0,5 mm.

12. Dispositif selon l'une quelconque des revendications 1 à 11, caractérisé en ce que la plaque avant (12; 84) peut être régulée thermostatiquement sur environ 37°C.

13. Dispositif selon la revendication 7, caractérisé en ce que la partie de tube capillaire montante (34; 102) qui se raccorde à la seconde (28; 100) ou à la troisième (32) parties de tube capillaire comprend au moins une partie de tube capillaire courbe avec des sections de parties de tube capillaire (62, 70) parallèles et sensiblement horizontales, et la section de partie de tube capillaire supérieure (70) du tuyau (36; 104) est reliée à un organe de fermeture à trois voies (72) qui est relié à une pompe d'aspiration (76) par l'intermédiaire d'une conduite (74).

14. Dispositif selon la revendication 13, caractérisé en ce qu'un détecteur (78, 82) est monté dans les sections de parties de tube capillaire horizontales (62, 70), au moyen duquel on peut fixer la valeur de la pression obtenue par la pompe d'aspiration (76).

15. Dispositif selon la revendication 13 ou 14, caractérisé en ce que la distance verticale entre les sections de parties de tube capillaire horizontales (62, 70) est comprise entre 60 et 140 mm.

16. Dispositif selon l'une quelconque des revendications 3 à 15, caractérisé en ce que les détecteurs (40, 42, 46, 78, 82, 112, 114, 116) sont des détecteurs optoélectronqiues.

FIG.1

FIG. 2

68
66
64
82
70
72
74
76
62
78
60

1.347

FIG. 3